# EUROPÄISCHE PATENTSCHRIFT

(11) **EP 4 004 323 B1**
(45) Veröffentlichungstag und Bekanntmachung des Hinweises auf die Patenterteilung: **09.09.2026**
(21) Anmeldenummer: 20745161.8
(22) Anmeldetag: 22.07.2020
(51) Int. Cl.: B25J 9/04, B25J 9/00

(54) **VERFAHREN ZUM HANDHABEN VON ABSTANDHALTERRAHMEN**
METHOD OF HANDLING SPACER FRAMES
MÉTHODE DE MANIPULATION DES CADRES D'ESPACEMENT

(30) Priorität: 23.07.2019 AT 506632019
(43) Veröffentlichungstag der Anmeldung: 01.06.2022
(73) Patentinhaber: LISEC Austria GmbH, 3353 Seitenstetten (AT)
(72) Erfinder: MACAREI, Clemens, 3353 Seitenstetten (AT); HEIDEN, Walter, 3353 Seitenstetten (AT)
(74) Vertreter: Beer & Partner Patentanwälte KG
(86) Internationale Anmeldenummer: PCT/EP2020/070640
(87) Internationale Veröffentlichungsnummer: WO 2021/013875

(56) Entgegenhaltungen:
- FR-A1- 2 936 835
- US-A1- 2019 024 441
- US-A1- 2019 071 921

## Beschreibung

Die Erfindung betrifft ein Verfahren zum Handhaben von Abstandhalterrahmen für Isolierglas mit den Merkmalen des Oberbegriffes von Anspruch 1.

Beim Herstellen von Isolierglas werden unter anderem Abstandhalterrahmen verwendet, die aus Abschnitten von Hohlprofilleisten zusammengesetzt oder durch Biegen von Hohlprofilleisten gebildet sind.

In Zuge des Herstellungsverfahrens von Isolierglas müssen die Abstandhalterrahmen von einer Station zum Herstellen der Abstandhalterrahmen übernommen und einer Station zum Beschichten von Abstandhalterrahmen mit Klebe- und Dichtmasse zugeführt werden. Des Weiteren müssen die mit Klebe- und Dichtmasse beschichteten Abstandhalterrahmen zu einer Station zum Zusammenbauen von Isolierglas bewegt werden, um dort auf eine Glasscheibe angesetzt zu werden.

Für das Bewegen der Abstandhalterrahmen zwischen den einzelnen Stationen einer Anlage ("Linie") zum Herstellen von Isolierglas sind unterschiedliche Vorrichtungen bekannt, wenn Abstandhalterrahmen nicht von Hand aus von einer Station zur nächsten bewegt werden.

US 2019/0024441 A1 offenbart eine Arbeitsweise und eine Einrichtung zum Herstellen von Isolierglas, bei welchen insgesamt drei Roboter verwendet werden, um beim Herstellen von Isolierglas benötigte Teile und Baueinheiten zu verschiedenen Stationen eine Anlage zum Herstellen von Isolierglas zu bewegen. Zwei der drei Roboter bewegen dabei Untereinheiten von herzustellendem Isolierglas.

Aus EP 2 796 653 A1 ist der Einsatz von Robotern mit Greifern zum Entnehmen von versiegeltem Isolierglas aus einer Versiegelungsstation bekannt. Bei dieser bekannten Vorrichtung werden versiegelte Isolierglasscheiben aus der Versiegelungsstation entnommen, zu einem Speicher bewegt und dort abgestellt.

DE 10 2006 026 503 B3 offenbart eine Vorrichtung mit einem Doppelgreifer, der an einem Roboter vorgesehen ist. Mit Hilfe des Doppelgreifers können Glassubstratplatten aufgenommen und zu einer Aufnahmestation und von dieser weg bewegt werden.

Aus KR 101778537 ist eine Anlage zum Herstellen von Isolierglas bekannt, bei der ein Roboter mit einer Greifereinrichtung mit zwei Klemmen verwendet wird, um Abstandhalterrahmen auf eine Glasscheibe anzusetzen.

Nachteilig bei den im Stand der Technik bekannten Vorrichtungen zum Handhaben von Abstandhalterrahmen ist es, dass diese auf eine spezielle Station in einer Anlage zum Herstellen von Isolierglas ausgelegt sind. Daher ist es erforderlich, dass für jede Station einer Anlage zum Herstellen von Isolierglas eine eigene Vorrichtung mit speziell darauf abgestelltem Funktionsumfang vorgesehen wird.

FR 2 936 835 A1 beschreibt das Herstellen von verglasten Fenstern oder Türen (huissieres vitres), also von kompletten Fenstern und Türen.

Vorgesehen ist ein Roboter, der (mit Saugern) Glas von einem Lager(bock) aufnimmt, zu einer Einrichtung zum Ausrichten, dann zu einer Einrichtung zum Vorbereiten (Reinigen) der Ränder des Glases für den Klebstoffauftrag, dann zu einer Einrichtung, in der das Glas in einen Rahmen eingesetzt wird, bewegt. Rahmen werden aus einem Vorrat zugeführt (nicht vom Roboter).

Die Einrichtung, in der Glas in einen Rahmen eingesetzt wird, umfasst zwei einander gegenüberliegende Schrägflächen, die durch Drehen ausgerichtet werden können.

Ein weiterer Roboter trägt Einrichtungen einerseits zum Vorbereiten der Rahmen für den Klebstoffauftrag und anderseits für das Auftragen von Klebstoff.

Bei der FR 2 936 835 A1 werden zwei unterschiedliche Roboter benötigt.

Die Roboter der FR 2 936 835 A1 sind nicht für den Transport von Abstandhaltern für Isolierglasscheiben bestimmt. Die Rahmen werden aus dem Vorrat "durch nicht gezeigte Mittel" zugeführt (FR 2 936 835 A1 Seite 5, Zeilen 10 bis 12).

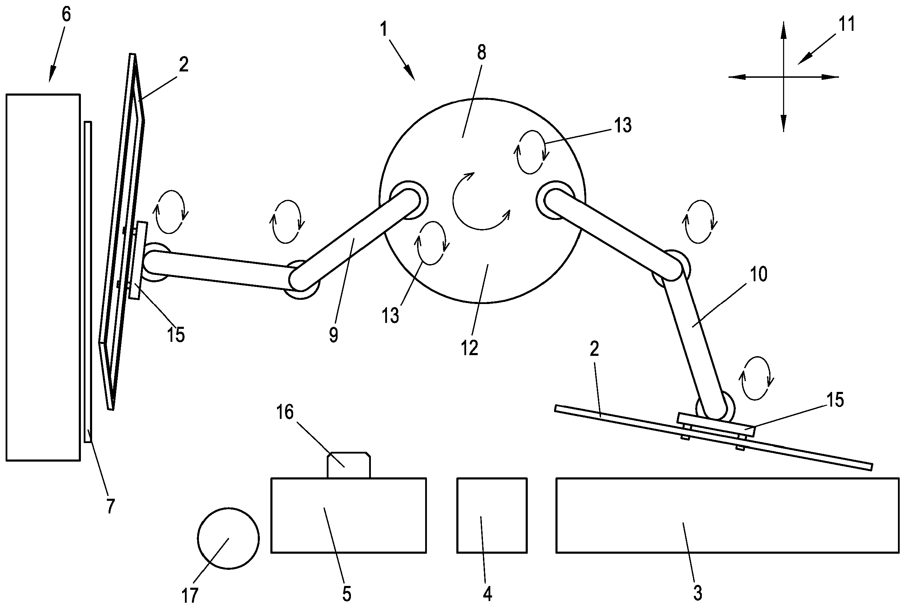

Die in Fig. 4 von US 2019/0071921 A1 gezeigten Roboter sind mehrachsige Roboter mit Gelenkarmen. Diese Roboter stehen aber auf Füßen und nicht auf Schienen (vgl. auch Fig. 6 und 11) und werden nicht nacheinander verschiedenen Stationen zugeordnet.

Bei der US 2019/0071921 A1 werden zwei Roboter mit unterschiedlichen Funktionen benötigt.

FR 1 733 909 A1 offenbart ähnlich wie FR 2 936 835 A1 das Herstellen von Türen, Fenstern u. dgl. mit eingesetztem Isolierglas, nicht aber das Herstellen von Isolierglas.

Bei FR 1 733 909 A1 wird Isolierglas mit einem Roboter von einem Lagerbock entnommen, zu einer Station, in welcher Klebstoff aufgetragen wird, zu einem Rollen-Tisch, auf dem ein Rahmen herangefördert wird, bewegt und schließlich in den Rahmen eingelegt.

Der Roboter bewegt den Rahmen nicht, sondern hebt schlussendlich die fertige Türe u. dgl. zu einem Lagerbock.

Der Erfindung liegt die Aufgabe zugrunde, ein Verfahren der eingangs genannten Gattung vorzustellen, mit dem das Handhaben von Abstandhalterrahmen für Isolierglas vereinfacht und wirtschaftlicher gestaltet ist.

Gelöst wird diese Aufgabe mit einem Verfahren, das die Merkmale von Anspruch 1 aufweist.

Bevorzugte und vorteilhafte Ausgestaltungen des erfindungsgemäßen Verfahrens sind Gegenstand der Unteransprüche.

Da bei der erfindungsgemäßen Verfahrensweise eine Einrichtung verwendet wird, die nacheinander verschiedenen Stationen einer Anlage zum Herstellen von Isolierglas zugeordnet wird und die die für jede Station erforderliche Handhabung des Abstandhalterrahmens ausführen kann, ist nur eine einzige Einrichtung während des gesamten Herstellungsvorganges von Isolierglas erforderlich.

Im Rahmen der Erfindung ist es bevorzugt, wenn eine Einrichtung verwendet wird, die nach Art eines mehrachsigen Roboters (Manipulator) ausgebildet ist, wobei es bevorzugt ist, wenn die Einrichtung zwei oder mehr als zwei gelenkig, vorzugsweise mehrfach gelenkig, ausgebildete Roboterarme aufweist.

Um die Einrichtung zu den verschiedenen Stationen einer Anlage zum Herstellen von Isolierglas bewegen zu können, ist in einer Ausführungsform des erfindungsgemäßen Verfahrens vorgesehen, dass eine Einrichtung verwendet wird, die eine verfahrbar ausgebildete Basis aufweist, und dass die Einrichtung wahlweise zu Stationen einer Anlage (Fertigungslinie) für Isolierglas und/oder zu einer von mehreren Anlagen (Fertigungslinien) für Isolierglas bewegt wird.

Bei dem erfindungsgemäßen Verfahren kann die Einrichtung auch dazu herangezogen werden, beim Biegen von Hohlprofilleisten zu einem Abstandhalterrahmen tätig zu werden, indem die Einrichtung in der Station zum Herstellen von Abstandhalterrahmen eine Hohlprofilleiste, die zu einem Abstandhalterrahmen gebogen wird, hält und führt.

In ähnlicher Weise kann die erfindungsgemäße Einrichtung herangezogen werden, um Abstandhalterrahmen in der Station zum Beschichten von Abstandhalterrahmen relativ zu Düsen, aus welchen Dicht- und Klebemittel auf den Abstandhalterrahmen aufgetragen wird, zu bewegen.

Bei dem erfindungsgemäßen Verfahren kann auch vorgesehen sein, dass die Einrichtung einen fertigen Abstandhalterrahmen zu einer Vorrichtung zum Füllen von Abstandhalterrahmen mit Trockenmittel, beispielsweise granulatförmigem Trockenmittel in Form von Molekularsieb, bewegt, wenn nicht mit Trockenmittel bereits vorgefüllte Hohlprofilleisten verwendet werden, um Abstandhalterrahmen herzustellen.

Weitere Einzelheiten und Merkmale des erfindungsgemäßen Verfahrens ergeben sich aus der nachstehenden Beschreibung eines Durchführungsbeispiels unter Bezugnahme auf die Zeichnung, in welcher eine Anlage und eine Einrichtung, mit der das erfindungsgemäße Verfahren durchgeführt werden kann, schematisch dargestellt sind.

In einer in der Zeichnung schematisch dargestellten Anlage ("Linie") zum Herstellen von Isolierglas ist eine Einrichtung 1 vorgesehen, mit der Abstandhalterrahmen 2 gehandhabt werden können, um diese von einer Station zur nächsten Station der Anlage zum Herstellen von Isolierglas zu bewegen.

Im Einzelnen umfasst die Anlage zum Herstellen von Isolierglas eine Rahmenbiegestation 3 und dieser nachgeschaltet gegebenenfalls eine Station 4 zum Füllen von Abstandhalterrahmen 2 mit Trockenmittel (z.B. Molekularsieb), eine Station 5 zum Auftragen von Dicht- und Klebemittel auf die Seitenflächen von Abstandhalterrahmen 2 und eine Station zum Zusammenbauen von Isolierglas, wobei eine Station 6 vorgesehen ist, in der Abstandhalterrahmen 2 auf eine Glasscheibe 7 angesetzt werden.

Der Anlage ist im gezeigten Ausführungsbeispiel eine Einrichtung 1 zugeordnet, die auf einer verfahrbar (Pfeile 11) und verdrehbar (Pfeil 12) ausgebildeten Basis 8 zwei Roboterarme 9, 10 umfasst. Die Roboterarme 9, 10 können gegenüber der Basis 8 verschwenkt werden, wie dies durch die Doppelpfeile 13 angedeutet ist. Jeder der Roboterarme 9, 10 ist gelenkig ausgebildet und besitzt an seinem freien Ende gegenüber dem äußeren Roboterarmteil verdrehbar ein Greifersystem 15, das zum Erfassen von Abstandhalterrahmen 2 eingerichtet ist. Im gezeigten Ausführungsbeispiel ist der Roboterarm 10 der Station 3 zum Biegen von Abstandhalterrahmen 2 zugeordnet und ist dabei, einen Abstandhalterrahmen 2 von der Station 3 zu entnehmen, um diesen zu einer Station 4 zum Füllen von Abstandhalterrahmen 2 mit Trockenmittel zu bewegen. Die Station 4 kann entfallen, wenn der Abstandhalterrahmen 2 aus bereits mit Trockenmittel vorgefüllten Hohlprofilleisten besteht.

Hinzuweisen ist darauf, dass mit dem erfindungsgemäßen Verfahren Abstandhalterrahmen 2 gehandhabt werden können, die aus einem einzigen Stück Hohlprofilleiste oder aus einer, mehrere miteinander verbundene Stücke von Hohlprofilleisten umfassenden Hohlprofilleiste durch Abbiegen der Hohlprofilleiste hergestellt wurden oder Abstandhalterrahmen, die aus Stücken von Hohlprofilleisten bestehen, die über Verbinder (Eckverbinder und/oder Geradverbinder) miteinander zu einem Abstandhalterrahmen 2 verbunden sind.

Wenn Abstandhalterrahmen 2 durch Biegen von Hohlprofilleisten hergestellt werden, kann das an den Roboterarmen 9, 10 vorgesehene Greifersystem 15 auch dazu dienen, die Hohlprofilleiste während des Biegens der Hohlprofilleiste zu einem Abstandhalterrahmen 2 zu halten und zu führen, was insbesondere bei größeren Abstandhalterrahmen 2 von Vorteil ist, um ungewünschte Verformungen der Hohlprofilleiste zu vermeiden.

Ein der Station 3 zum Herstellen (z.B. Biegen) von Abstandhalterrahmen 2 entnommener Abstandhalterrahmen 2 wird, nachdem er gegebenenfalls mit Trockenmittel gefüllt worden ist, zu einer Station 5 ("Butylautomat") gebracht, in der auf die Seitenflächen des Abstandhalterrahmens Dicht- bzw. Klebemittel (Butylkautschuk), das aus Düsen 16 austritt, aufgebracht wird. In diesem Fall dient das Greifersystem 15 der Einrichtung 1 dazu, den Abstandhalterrahmen 2 im Bereich der Düsen 16 der Station 5 zu bewegen und nach dem Beschichten jedes Rahmenschenkels zu drehen, damit der nächste Rahmenschenkel beschichtet werden kann.

Wie üblich ist in der Station 5 ein Vorratsbehälter 17 für Butylkautschuk als Dicht- und Klebemittel vorgesehen.

Ein mit Dicht- und Klebemittel beschichteter Abstandhalterrahmen 2 wird dann von der Einrichtung 1 zu einer Station 6 gebracht, in der ein Abstandhalterrahmen 2 auf eine Glasscheibe 7 angesetzt wird. In einer der Station 6 nachgeschalteten Zusammenbaustation wird dann eine zweite Glasscheibe angesetzt.

Wenn Dreifach-Isolierglas oder Mehrfachisolierglas hergestellt wird, wird auf die zweite oder die dritte usw. angesetzte Glasscheibe 7 in der Station 6 jeweils ein weiterer Abstandhalterrahmen 2 angesetzt.

Im gezeigten Ausführungsbeispiel besitzt die Einrichtung 1 zwei Roboterarme 9, 10, sodass einer der Roboterarme, nachdem er einen Abstandhalterrahmen 2 auf eine Glasscheibe 7 angesetzt hat, frei ist, um sich wieder zu der Station 3 zum Herstellen von Abstandhalterrahmen 2 zu bewegen und dort einen neuen Abstandhalterrahmen 2 aufzunehmen.

Die Greifersysteme 15 an den freien Enden der Roboterarme 9, 10 können auch dazu dienen, einen Abstandhalterrahmen 2 zu spannen, also in der richtigen Form zu halten, insbesondere wenn dieser in der Station 4 befüllt, in der Station 5 butyliert und/oder in der Station 6 auf eine Glasscheibe 7 angesetzt wird.

Es ist nicht zwingend, dass eine Einrichtung 1 verwendet wird, bei der die Greifersysteme 15 an den Roboterarmen 9, 10 identisch ausgebildet sind. Vielmehr können für bestimmte Anwendungsfälle auch unterschiedlich ausgebildete Greifersysteme 15 (beispielsweise auch auswechselbar) vorgesehen sein.

Mit dem erfindungsgemäßen Verfahren kann/können einer oder mehrere der nachstehend genannten Vorteile der Anwendungsmöglichkeiten erreicht werden.

Die als multifunktionaler Roboter ausgebildete Einrichtung 1 steuert automatisch das Greifen, Spannen, Wenden, Butylieren und Ansetzen eines Abstandhalterrahmens. Zusätzlich können der Einrichtung 1
- Mittel zum Kontrollieren des Füllgrades von Abstandhalterrahmen 2 mit Trockenmittel (Gewichtskontrolle),
- Mittel zum Kontrollieren der Abmessungen von Abstandhalterrahmen 2 und/oder
- Mittel zum Kontrollieren der Qualität der Beschichtung von Abstandhalterrahmen 2 mit Dicht- und Klebemittel (Butylierung)
zugeordnet sein.

Die als multifunktionaler Roboter ausgebildete Einrichtung 1 dient als zentrales Steuerelement und bedient mehrere (Fertigungs-)Stationen bei der Isolierglasherstellung.

Da die Einrichtung 1 das Handhaben der Abstandhalterrahmen 2 übernimmt, entfallen bei den einzelnen Stationen einer Linie zum Herstellen von Isolierglas Vorrichtungen zum Handhaben von Abstandhalterrahmen 2.

Das Übergeben von Abstandhalterrahmen 2 in die nächste Station erfolgt ebenfalls mit Hilfe der erfindungsgemäß verwendeten Einrichtung 1, sodass diese auch eine (automatische) Transportfunktion übernimmt. Dies hat den Vorteil, dass Fördereinrichtungen, die Abstandhalterrahmen 2 zwischen den einzelnen Stationen transportieren, entfallen können.

Ein Vorteil des erfindungsgemäßen Verfahrens ist es, dass eine kompakte Bauweise von Linien zum Herstellen von Isolierglas möglich ist, und Anforderungen an Ausrüstungen der einzelnen Stationen verringert werden.

Es wird eine Verbesserung der Auslastung der Einrichtung in Form des multifunktionalen Roboters erreicht.

Zusammenfassend kann ein Ausführungsbeispiel der Erfindung wie folgt beschrieben werden:
Zum Handhaben von Abstandhalterrahmen 2 im Zuge des Herstellens von Isolierglas wird eine nach Art eines wenigstens einarmigen Roboters (Manipulators) ausgebildete, verfahrbare und drehbare Einrichtung 1 verwendet. Die Einrichtung 1 erfasst einen Abstandhalterrahmen 2 mit einem an dem freien Ende des Roboterarmes 9, 10 drehbar vorgesehenen Greifersystem 15. Ein Abstandhalterrahmen 2 wird von der Einrichtung 1 zu Stationen einer Linie zum Herstellen von Isolierglas bewegt.

Beispielsweise wird ein Abstandhalterrahmen 2 in einer Station 3 zum Herstellen von Abstandhalterrahmen aufgenommen, zu einer Station 4 zum Füllen des Abstandhalterrahmens 2 bewegt, wenn der Abstandhalterrahmen 2 mit hygroskopischem Material zu füllen ist, dann weiter zu einer Station 5, in der die Seitenflächen des Abstandhalterrahmens 2 mit Dicht- und Klebemittel beschichtet werden, bewegt und schließlich zu einer Station 6 zum Zusammenbauen von Isolierglas bewegt, in der der Abstandhalterrahmen 2 an eine Glasscheibe 7 angesetzt wird.

## Patentansprüche

1. Verfahren zum Handhaben von Abstandhalterrahmen (2) für Isolierglas, wobei eine nach Art eines Roboters ausgebildete Einrichtung (1), mit der Abstandhalterrahmen (2) erfasst und bewegt werden, verwendet wird, **dadurch gekennzeichnet, dass** die Einrichtung (1) nacheinander einer Station (3) zum Herstellen von Abstandhalterrahmen (2), gegebenenfalls einer Station (4) zum Füllen von Abstandhalterrahmen (2) mit hygroskopischem Material, einer Station (5) zum Beschichten von Abstandhalterrahmen (2) mit Dicht- und Klebemittel und einer Station (6) zum Zusammenbauen von Isolierglas zugeordnet wird, dass die Einrichtung (1) in der Station (3) zum Herstellen von Abstandhalterrahmen (2) einen Abstandhalterrahmen (2) übernimmt und gegebenenfalls zu der Station (4) zum Füllen von Abstandhalterrahmen (2) mit hygroskopischem Material bewegt, dass der von der Einrichtung (1) gehaltene Abstandhalterrahmen (2) in der Station (5) zum Beschichten mit Dicht- und Klebemittel beschichtet wird und dass die Einrichtung (1) den mit Dicht- und Klebemittel beschichteten Abstandhalterrahmen (2) in der Station (6) zum Zusammenbauen auf eine Glasscheibe (7) ansetzt.

2. Verfahren nach Anspruch 1, **dadurch gekennzeichnet, dass** eine Einrichtung (1) verwendet wird, die nach Art eines mehrachsigen Roboters ausgebildet ist.

3. Verfahren nach Anspruch 1 oder 2, **dadurch gekennzeichnet, dass** eine Einrichtung (1) verwendet wird, die zwei oder mehr als zwei gelenkig, vorzugsweise mehrfach gelenkig, ausgebildete Roboterarme (9, 10) aufweist.

4. Verfahren nach einem der Ansprüche 1 bis 3, **dadurch gekennzeichnet, dass** eine Einrichtung (1) verwendet wird, die eine verfahrbar ausgebildete Basis (8) aufweist, und dass die Einrichtung (1) zu Stationen einer Fertigungslinie für Isolierglas und/oder zu einer von mehreren Fertigungslinien für Isolierglas bewegt wird.

5. Verfahren nach einem der Ansprüche 1 bis 4, **dadurch gekennzeichnet, dass** die Einrichtung (1) Abstandhalterrahmen (2) mit Hilfe eines Greifersystems (15), das an dem wenigstens einen Roboterarm (9, 10) der Einrichtung (1) angeordnet ist, erfasst und zu Stationen und/oder Fertigungslinien bewegt.

6. Verfahren nach einem der Ansprüche 1 bis 5, **dadurch gekennzeichnet, dass** die Einrichtung (1) in der Station (3) zum Herstellen von Abstandhalterrahmen (2) eine Hohlprofilleiste, die zu einem Abstandhalterrahmen (2) gebogen wird, hält und führt.

7. Verfahren nach einem der Ansprüche 1 bis 6, **dadurch gekennzeichnet, dass** die Einrichtung (1) Abstandhalterrahmen (2) in der Station (5) zum Beschichten von Abstandhalterrahmen (2) relativ zu Düsen (16), aus denen Dicht- und Klebemittel auf Abstandhalterrahmen (2) aufgetragen wird, bewegt.

8. Verfahren nach einem der Ansprüche 5 bis 7, **dadurch gekennzeichnet, dass** das Greifersystem (15) der Einrichtung (1) Abstandhalterrahmen (2) mit Klemmen hält, und dass an jeden Schenkel des Abstandhalterrahmens (2) wenigstens eine Klemme des Greifersystems (15) angelegt wird.

9. Verfahren nach Anspruch 8, **dadurch gekennzeichnet, dass** der Abstandhalterrahmen (2) von dem Greifersystem (15) in der für das Ansetzen des Abstandhalterrahmens (2) an eine Glasscheibe (7) richtigen Form und Lage gehalten wird.

10. Verfahren nach einem der Ansprüche 5 bis 9, **dadurch gekennzeichnet, dass** das Greifersystem (15) gegenüber dem Roboterarm (9, 10) gedreht wird, um eine Hohlprofilleiste in der Station (3) zum Herstellen von Abstandhalterrahmen zu halten und zu führen, und/oder Abstandhalterrahmen (2) in der Station (5) zum Beschichten von Abstandhalterrahmen (2) zu wenden und/oder um Abstandhalterrahmen (2) in der Station zum Zusammenbauen von Isolierglas zu der Glasscheibe (7), auf die der Abstandhalterrahmen (2) anzusetzen ist, auszurichten.

11. Verfahren nach einem der Ansprüche 5 bis 10, **dadurch gekennzeichnet, dass** eine Einrichtung (1) verwendet wird, die an Roboterarmen (9, 10) Greifersysteme (15) mit unterschiedlichen Funktionen trägt.

12. Verfahren nach einem der Ansprüche 8 bis 11, **dadurch gekennzeichnet, dass** eine Einrichtung verwendet wird, deren Greifersystem (15) eine Flanschplatte, an der die Klemmen angeordnet sind, umfasst.

## Claims

1. Method for handling spacer frames (2) for insulating glass, wherein a robot-type device (1) is used, with which the spacer frame is used to grasp and move the spacer frames (2), **characterized in that** the device (1) is successively assigned to a station (3) for manufacturing spacer frames (2), optionally a station (4) for filling spacer frames (2) with hygroscopic material, a station (5) for coating spacer frames (2) with sealant and adhesive, and a station (6) for assembling insulating glass, **in that** the device (1) picks up a spacer frame (2) in the station (3) for manufacturing spacer frames (2) and, optionally, moves it to the station (4) for filling spacer frames (2) with hygroscopic material, **in that** the spacer frame (2) held by the device (1) is coated in the station (5) for coating with sealant and adhesive, and **in that** the device (1) applies the spacer frame (2) coated with sealant and adhesive to a glass pane (7) in the station (6) for assembly.

2. Method according to claim 1, **characterized in that** a device (1) is used which is designed in the manner of a multi-axis robot.

3. Method according to claim 1 or 2, **characterized in that** a device (1) is used which comprises two or more than two robot arms (9, 10) designed to be articulated, preferably multi-articulated.

4. Method according to one of claims 1 to 3, **characterized in that** a device (1) is used which comprises a movably designed base (8), and **in that** the device (1) is moved to stations of an insulating glass production line and/or to one of several insulating glass production lines.

5. Method according to one of claims 1 to 4, **characterized in that** the device (1) grasps spacer frames (2) using a gripper system (15) arranged on the at least one robot arm (9, 10) of the device (1) and moves them to stations and/or production lines.

6. Method according to one of claims 1 to 5, **characterized in that** the device (1) holds and guides a hollow profile strip, which is bent into a spacer frame (2), in the station (3) for manufacturing spacer frames (2).

7. Method according to one of claims 1 to 6, **characterized in that** the device (1) moves spacer frames (2) in the station (5) for coating spacer frames (2) relative to nozzles (16) from which sealants and adhesives are applied to the spacer frames (2).

8. Method according to one of claims 5 to 7, **characterized in that** the gripper system (15) of the device (1) holds spacer frames (2) with clamps, and **in that** at least one clamp of the gripper system (15) is applied to each leg of the spacer frame (2).

9. Method according to claim 8, **characterized in that** the spacer frame (2) is held by the gripper system (15) in the correct shape and position for attaching the spacer frame (2) to a glass pane (7).

10. Method according to one of claims 5 to 9, **characterized in that** the gripper system (15) is rotated relative to the robot arm (9, 10) to hold and guide a hollow profile strip in the station (3) for manufacturing spacer frames, and/or to turn spacer frames (2) in the station (5) for coating spacer frames (2) and/or to align spacer frames (2) in the station for assembling insulating glass with the glass pane (7) to which the spacer frame (2) is to be attached.

11. Method according to one of claims 5 to 10, **characterized in that** a device (1) is used which carries gripper systems (15) with different functions on robot arms (9, 10).

12. Method according to one of claims 8 to 11, **characterized in that** a device is used whose gripper system (15) comprises a flange plate on which the clamps are arranged.

## Revendications

1. Procédé pour la manipulation de châssis espaceurs (2) pour vitrage isolant, utilisant une installation (1) conçue comme un robot avec laquelle des châssis espaceurs (2) sont saisis et déplacés, **caractérisé en ce que** l'installation (1) est associée, les uns à la suite des autres, à un poste (3) pour la fabrication de châssis espaceurs (2), le cas échéant un poste (4) pour le remplissage de châssis espaceurs (2) avec un matériau hygroscopique, un poste (5) pour l'application de mastic-colle sur des châssis espaceurs (2) et un poste (6) pour l'assemblage d'un vitrage isolant, **en ce que** l'installation (1) récupère un châssis espaceur (2) dans le poste (3) pour la fabrication de châssis espaceurs (2) et le déplace, le cas échéant, vers le poste (4) pour le remplissage de châssis espaceurs (2) avec un matériau hygroscopique, **en ce que** le châssis espaceur (2) retenu par l'installation (1) reçoit une application de mastic-colle dans le poste d'application (5) et **en ce que**
l'installation (1) place le châssis espaceur (2) ayant reçu l'application de mastic-colle sur une vitre (7) dans le poste d'assemblage (6).

2. Procédé selon la revendication 1, **caractérisé en ce qu'**il utilise une installation (1) conçue comme un robot multiaxes.

3. Procédé selon la revendication 1 ou 2, **caractérisé en ce qu'**il utilise une installation (1) qui comporte deux ou plus de deux bras de robot (9, 10) articulés, de préférence polyarticulés.

4. Procédé selon l'une des revendications 1 à 3, **caractérisé en ce qu'**il utilise une installation (1) comportant un socle (8) conçu pour pouvoir se déplacer et **en ce que**
l'installation (1) est déplacée vers des postes d'une chaîne de fabrication de vitrage isolant et/ou vers une chaîne parmi plusieurs chaînes de fabrication de vitrage isolant.

5. Procédé selon l'une des revendications 1 à 4, **caractérisé en ce que** l'installation (1) saisit des châssis espaceurs (2) et les déplace vers des postes et/ou des chaînes de fabrication à l'aide d'un système de préhension (15) qui est disposé sur l'au moins un bras de robot (9, 10) de l'installation (1).

6. Procédé selon l'une des revendications 1 à 5, **caractérisé en ce que** l'installation (1) retient et guide dans le poste (3) pour la fabrication de châssis espaceurs (2) une barre profilée creuse qui est pliée pour former un châssis espaceur (2).

7. Procédé selon l'une des revendications 1 à 6, **caractérisé en ce que** l'installation (1) déplace des châssis espaceurs (2) dans le poste (5) pour l'application de mastic-colle sur des châssis espaceurs (2) par rapport à des buses (16) à partir desquelles du mastic-colle est appliqué sur des châssis espaceurs (2).

8. Procédé selon l'une des revendications 5 à 7, **caractérisé en ce que** le système de préhension (15) de l'installation (1) retient des châssis espaceurs (2) avec des pinces et **en ce qu'**au moins une pince du système de préhension (15) est appliquée sur chaque bras du châssis espaceur (2).

9. Procédé selon la revendication 8, **caractérisé en ce que** le châssis espaceur (2) est tenu par le système de préhension (15) dans la forme et la position qui conviennent pour la pose du châssis espaceur (2) sur une vitre (7).

10. Procédé selon l'une des revendications 5 à 9, **caractérisé en ce que** le système de préhension (15) est tourné par rapport au bras de robot (9, 10) afin de tenir et guider une barre profilée creuse dans le poste (3) pour la fabrication de châssis espaceurs et/ou de tourner des châssis espaceurs (2) dans le poste (5) pour l'application de mastic-colle sur des châssis espaceurs (2) et/ou pour orienter des châssis espaceurs (2) dans le poste pour l'assemblage d'un vitrage isolant par rapport à la vitre (7) sur laquelle le châssis espaceur (2) doit être posé.

11. Procédé selon l'une des revendications 5 à 10, **caractérisé en ce qu'**il utilise une installation (1) qui porte des systèmes de préhension (15) ayant différentes fonctions sur des bras de robot (9, 10).

12. Procédé selon l'une des revendications 8 à 11, **caractérisé en ce qu'**il utilise une installation dont le système de préhension (15) comprend une plaque à brides intérieures sur laquelle les pinces sont disposées.
